# EUROPEAN PATENT SPECIFICATION

(11) **EP 3 113 523 B1**
(45) Date of publication and mention of the grant of the patent: **31.10.2018**
(21) Application number: 15174927.2
(22) Date of filing: 02.07.2015
(51) Int. Cl.: H04W 4/02, G06F 17/30

(54) **A VIDEO REGION INDICATOR THAT INDICATES THAT VIDEO CONTENT IS AVAILABLE**
VIDEOBEREICHSINDIKATOR ZUR ANZEIGE DER VERFÜGBARKEIT VON VIDEOINHALT
INDICATEUR DE ZONE VIDÉO QUI INDIQUE QU'UN CONTENU VIDÉO EST DISPONIBLE

(43) Date of publication of application: 04.01.2017
(73) Proprietor: Nokia Technologies Oy, 02610 Espoo (FI)
(72) Inventor: LEHTINIEMI, Arto, 33880 Lempäälä (FI); LAAKSONEN, Lasse, 33210 Tampere (FI); VILERMO, Miikka, 37200 Siuro (FI); TAMMI, Mikko, 33310 Tampere (FI)
(74) Representative: Nokia EPO representatives

(56) References cited:
- US-A1- 2008 244 648
- US-A1- 2014 347 387

## Description

### TECHNICAL FIELD

The present application relates generally to a video region indicator that indicates that video content is available.

### BACKGROUND

As electronic apparatuses become more pervasive, many users are increasingly using such apparatuses for purposes relating to navigation, exploration of map information, and/or the like. As such, it may be desirable to configure an electronic apparatus such that the electronic apparatus allows a user to explore map information in an easy and intuitive manner. US20080244648 discloses a method for providing panoramic videos and images to a user using a server-client architecture while minimizing the wait time necessary before still images are available for viewing or videos begin playing. A series of location-referenced panoramic images are separated into one-dimensional tracks. Intuitive user controls are provided which allow the user to start and stop video playback, step through the panoramas in a track one at a time, and change the viewing orientation within the panorama. A video will start playing as soon as the video files for the preferred projected cube faces have been downloaded. This delay is reduced by storing the videos as key frame distance files for opposing directions for each cube face and further reduced by encoding videos with different starting points so that they are staggered by a portion of the key frame distance. US20140347387 discloses an approach is provided in which a system retrieves a street view image that depicts a geographical area viewed from a street view perspective. The system identifies a video device depicted in the street view image that provides a live video stream of a real-time viewable area corresponding to at least a portion of the depicted geographical area. In turn, the system generates a composite image that combines the street view image with a viewing area overlay corresponding to the real-time viewable area.

### SUMMARY

The invention is defined by the subject matter of the independent claims. Various aspects of example embodiments are set out in the summary, the drawings, the detailed description, and the claims.

One or more example embodiments may provide an apparatus, a computer readable medium, a non-transitory computer readable medium, a computer program product, and/or a method for determining an interaction navigational location, causing display of a perspective image that depicts a view of a portion of map information from the interaction navigational location, causing display of a video region indicator that indicates that video content is available at a video navigational location, the video content depicting a view of a portion of the map information from the video navigational location, determining that the interaction navigational location has changed such the interaction navigational location corresponds with the video navigational location, and causing rendering of the video content based, at least in part, on the interaction navigational location corresponding with the video navigational location.

One or more example embodiments may provide an apparatus, a computer readable medium, a computer program product, and/or a non-transitory computer readable medium having means for determining an interaction navigational location, means for causing display of a perspective image that depicts a view of a portion of map information from the interaction navigational location, means for causing display of a video region indicator that indicates that video content is available at a video navigational location, the video content depicting a view of a portion of the map information from the video navigational location, means for determining that the interaction navigational location has changed such the interaction navigational location corresponds with the video navigational location, and means for causing rendering of the video content based, at least in part, on the interaction navigational location corresponding with the video navigational location.

An apparatus comprising at least one processor and at least one memory, the memory comprising machine-readable instructions, that when executed cause the apparatus to perform determination of an interaction navigational location, causation of display of a perspective image that depicts a view of a portion of map information from the interaction navigational location, causation of display of a video region indicator that indicates that video content is available at a video navigational location, the video content depicting a view of a portion of the map information from the video navigational location, determination that the interaction navigational location has changed such the interaction navigational location corresponds with the video navigational location, and causation of rendering of the video content based, at least in part, on the interaction navigational location corresponding with the video navigational location.

In at least one example embodiment, the determination of the interaction navigational location comprises receipt of information indicative of an input that identifies the interaction navigational location.

One or more example embodiments further perform determine that the interaction navigational location has changed such that the interaction navigational location fails to correspond with the video navigational location, and cause termination of rendering of the video content.

In at least one example embodiment, the video content is video content captured by a camera module located at a geographical location that is represented by the video navigational location.

In at least one example embodiment, the determination of the interaction navigational location comprises receipt of information indicative of a user input that designates the interaction navigational location.

In at least one example embodiment, the interaction navigational location identifies a geographical location.

In at least one example embodiment, a position within the perspective image depicts the video navigational location, and the video region indicator is displayed at the position within the perspective image.

In at least one example embodiment, the video region indicator is a spatial video region indicator.

In at least one example embodiment, the spatial video region indicator indicates the portion of the map information within the perspective image.

In at least one example embodiment, the spatial video region indicator is a translucent prism that overlays at least a portion of the perspective image.

In at least one example embodiment, the portion of the perspective image is representative of the portion of the map information depicted in the video content.

In at least one example embodiment, the spatial video region indicator is sized based, at least in part, on the portion of the map information depicted in the video content.

In at least one example embodiment, the spatial video region indicator is oriented based, at least in part, on the portion of the map information depicted in the video content.

In at least one example embodiment, the spatial video region indicator is shaped based, at least in part, on the portion of the map information depicted in the video content.

In at least one example embodiment, the spatial video region indicator is centered about the video navigational location.

In at least one example embodiment, the spatial video region indicator is centered about a location of a camera module associated with the video content.

In at least one example embodiment, the video content is captured by way of a camera module, and the video navigational location is a location of the camera module while capturing the video content.

In at least one example embodiment, the causation of display of the video region indicator comprises determine that video content is available at a video navigational location, the video content depicting the view of the portion of the map information from the video navigational location, select a frame of the video content based, at least in part, on the view of the portion of map information from the interaction navigational location, and cause display of the video region indicator such that the video region indicator comprises the frame of the video content.

In at least one example embodiment, the selection of the frame of the video content is based, at least in part, on the absence of movement associated with at least one edge of the frame of the video content.

One or more example embodiments further perform filtering of movement information from at least one edge of the frame of the video content.

In at least one example embodiment, the causation of display of the video region indicator comprises select a plurality of frames of the video content based, at least in part, on the view of the portion of map information from the interaction navigational location, and cause display of the video region indicator such that the video region indicator comprises the plurality of frames of the video content.

In at least one example embodiment, the causation of display of the video region indicator such that the video region indicator comprises the plurality of frames of the video content comprises causation of rendering of the plurality of frames of the video content such that the plurality of frames of the video content at least partially correspond with the video region indicator.

In at least one example embodiment, the selection of the plurality of frames of the video content is based, at least in part, on the absence of movement associated with at least one edge of each frame of the plurality of frames of the video content.

One or more example embodiments further perform filtering of movement information from at least one edge of each frame of the plurality of frames of the video content.

In at least one example embodiment, the selection of the frame of the video content is based, at least in part, on at least one aspect of the perspective image.

In at least one example embodiment, the video content is panoramic video content.

In at least one example embodiment, the panoramic video content is video content that comprises a plurality of views of the portion of the map information from the video navigational location.

In at least one example embodiment, the view of the portion of the map information from the video navigational location is a panoramic view of the portion of the map information from the video navigational location.

In at least one example embodiment, the panoramic view is a three hundred sixty degree view.

In at least one example embodiment, the panoramic view is a spherical view.

In at least one example embodiment, the view of the portion of the map information from the video navigational location corresponds with a viewing angle of the panoramic video content.

In at least one example embodiment, the causation of display of the video region indicator comprises determine a viewing angle of the perspective image, select a frame of the panoramic video content based, at least in part, on the viewing angle of the perspective image, and cause display of the video region indicator such that the video region indicator comprises at least a portion of the frame of the panoramic video content.

In at least one example embodiment, the causation of display of the video region indicator comprises determine a viewing angle of the perspective image, select a frame of the panoramic video content based, at least in part, on the perspective image and the viewing angle of the perspective image, and cause display of the video region indicator such that the video region indicator comprises at least a portion of the frame of the panoramic video content.

In at least one example embodiment, the video content is panoramic video content, and the rendering of the panoramic video content comprises rendering of the panoramic video content at a viewing angle.

One or more example embodiments further perform determine that the viewing angle changed to a different viewing angle, and cause rendering of the panoramic video content at the different viewing angle in response to the determination that the viewing angle changed to the different viewing angle.

In at least one example embodiment, the video content is panoramic video content.

One or more example embodiments further perform determine a viewing angle of the panoramic video content, and cause rendering of the panoramic video content at the viewing angle based, at least in part, on the determination of the viewing angle of the panoramic video content.

In at least one example embodiment, the video content is predetermined video content.

One or more example embodiments further perform receive the predetermined video content from a separate apparatus.

In at least one example embodiment, the video content is streaming video content.

One or more example embodiments further perform receive the streaming video content from a separate apparatus.

One or more example embodiments further perform receive the video content from a separate apparatus.

In at least one example embodiment, the separate apparatus is a video capture apparatus.

In at least one example embodiment, the video content is captured by a camera module of the video capture apparatus.

In at least one example embodiment, the video content is captured by a plurality of camera modules of the video capture apparatus.

In at least one example embodiment, the video content comprises audio information, and further comprising: cause rendering of the audio information based, at least in part, on the display of the video region indicator.

In at least one example embodiment, the audio information is rendered such that the audio information is associated with the video navigational location.

In at least one example embodiment, the perspective image is an image that depicts street-level imagery associated with the interaction navigational location.

One or more example embodiments further perform generate the perspective image based, at least in part, on the map information.

One or more example embodiments further perform receive the perspective image from a separate apparatus.

### BRIEF DESCRIPTION OF THE DRAWINGS

For a more complete understanding of one or more example embodiments, reference is now made to the following descriptions taken in connection with the accompanying drawings in which:
FIG. 1 is a block diagram showing an apparatus according to at least one example embodiment;
FIG. 2 is a diagram illustrating a representation of map information according to at least one example embodiment;
FIGS. 3A-3C are diagrams illustrating perspective images according to at least one example embodiment;
FIGS. 4A-4C are diagrams illustrating a video navigational location according to at least one example embodiment;
FIGS. 5A-5C are diagrams illustrating a video region indicator according to at least one example embodiment;
FIG. 6 is a flow diagram illustrating activities associated with causation of rendering of video content according to at least one example embodiment;
FIG. 7 is a flow diagram illustrating activities associated with causation of termination of rendering of video content according to at least one example embodiment;
FIG. 8 is a flow diagram illustrating activities associated with causation of display of a video region indicator such that the video region indicator comprises at least one frame of video content according to at least one example embodiment; and
FIG. 9 is a flow diagram illustrating activities associated with causation of rendering of panoramic video content at a viewing angle according to at least one example embodiment.

### DETAILED DESCRIPTION OF THE DRAWINGS

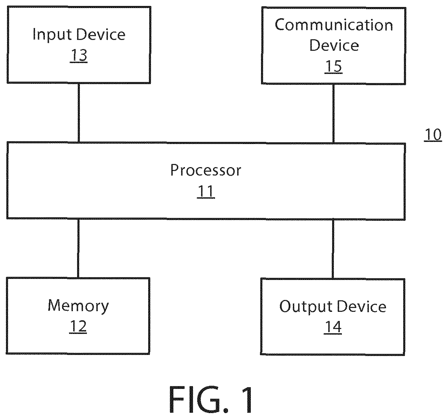

Various example embodiments and some of their potential advantages are understood by referring to FIGS. 1 through 9 of the drawings.

Some example embodiments will now further be described hereinafter with reference to the accompanying drawings, in which some, but not all, example embodiments are shown. One or more example embodiments may be embodied in many different forms and the claims should not be construed as being strictly limited to the example embodiments set forth herein; rather, these example embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with one or more example embodiments. Thus, use of any such terms should not be taken to limit the scope of example embodiments.

Additionally, as used herein, the term 'circuitry' refers to (a) hardware-only circuit implementations (e.g., implementations in analog circuitry, digital circuitry and/or any combination thereof); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that utilize software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit, an applications processor integrated circuit, a cellular network apparatus, other network apparatus, and/or other computing apparatus.

As defined herein, a "non-transitory computer readable medium," which refers to a physical medium (e.g., volatile or non-volatile memory device), can be differentiated from a "transitory computer-readable medium," which refers to an electromagnetic signal. In at least one example embodiment, a non-transitory computer readable medium is a tangible non-transitory computer readable medium.

FIG. 1 is a block diagram showing an apparatus, such as an electronic apparatus 10, according to at least one example embodiment. It should be understood, however, that an electronic apparatus as illustrated and hereinafter described is merely illustrative of an electronic apparatus that could benefit from one or more example embodiments and, therefore, should not be taken to limit the scope of the claims. While electronic apparatus 10 is illustrated and will be hereinafter described for purposes of example, other types of electronic apparatuses may readily employ one or more example embodiments. Electronic apparatus 10 may be a personal digital assistant (PDAs), a pager, a mobile computer, a desktop computer, a television, a gaming apparatus, a laptop computer, a tablet computer, a media player, a camera, a video recorder, a mobile phone, a global positioning system (GPS) apparatus, an automobile, a kiosk, an electronic table, and/or any other types of electronic systems. Moreover, the apparatus of at least one example embodiment need not be the entire electronic apparatus, but may be a component or group of components of the electronic apparatus in other example embodiments. For example, the apparatus may be an integrated circuit, a set of integrated circuits, and/or the like.

Furthermore, apparatuses may readily employ one or more example embodiments regardless of any intent to provide mobility. In this regard, even though some example embodiments may be described in conjunction with mobile applications, it should be understood that such example embodiments may be utilized in conjunction with a variety of other applications, both in the mobile communications industries and outside of the mobile communications industries. For example, the apparatus may be, at least part of, a non-carryable apparatus, such as a large screen television, an electronic table, a kiosk, an automobile, and/or the like.

In at least one example embodiment, electronic apparatus 10 comprises at least one processor, such as processor 11 and at least one memory, such as memory 12. Processor 11 may be any type of processor, controller, embedded controller, processor core, and/or the like. In at least one example embodiment, processor 11 utilizes computer program code to cause an apparatus to perform one or more actions. Memory 12 may comprise volatile memory, such as volatile Random Access Memory (RAM) including a cache area for the temporary storage of data and/or other memory, for example, non-volatile memory, which may be embedded and/or may be removable. The non-volatile memory may comprise an EEPROM, flash memory and/or the like. Memory 12 may store any of a number of pieces of information, and data. The information and data may be used by the electronic apparatus 10 to implement one or more functions of the electronic apparatus 10, such as the functions described herein. In at least one example embodiment, memory 12 includes computer program code such that the memory and the computer program code are configured to, working with the processor, cause the apparatus to perform one or more actions described herein.

The electronic apparatus 10 may further comprise a communication device 15. In at least one example embodiment, communication device 15 comprises an antenna, (or multiple antennae), a wired connector, and/or the like in operable communication with a transmitter and/or a receiver. In at least one example embodiment, processor 11 provides signals to a transmitter and/or receives signals from a receiver. The signals may comprise signaling information in accordance with a communications interface standard, user speech, received data, user generated data, and/or the like. Communication device 15 may operate with one or more air interface standards, communication protocols, modulation types, and access types (e.g., one or more standards in the Institute of Electrical and Electronics Engineers (IEEE) 802 family of wired and wireless standards). By way of illustration, the electronic communication device 15 may operate in accordance with second-generation (2G) wireless communication protocols IS-136 (time division multiple access (TDMA)), Global System for Mobile communications (GSM), and IS-95 (code division multiple access (CDMA)), with third-generation (3G) wireless communication protocols, such as Universal Mobile Telecommunications System (UMTS), CDMA2000, wideband CDMA (WCDMA) and time division-synchronous CDMA (TD-SCDMA), and/or with fourth-generation (4G) wireless communication protocols, wireless networking protocols, such as 802.11, short-range wireless protocols, such as Bluetooth, and/or the like. Communication device 15 may operate in accordance with wireline protocols, such as Ethernet, digital subscriber line (DSL), asynchronous transfer mode (ATM), and/or the like.

Processor 11 may comprise means, such as circuitry, for implementing audio, video, communication, navigation, logic functions, and/or the like, as well as for implementing one or more example embodiments including, for example, one or more of the functions described herein. For example, processor 11 may comprise means, such as a digital signal processor device, a microprocessor device, an analog to digital converter, a digital to analog converter, processing circuitry and other circuits, for performing various functions including, for example, one or more of the functions described herein. The apparatus may perform control and signal processing functions of the electronic apparatus 10 among these devices according to their respective capabilities. The processor 11 thus may comprise the functionality to encode and interleave message and data prior to modulation and transmission. The processor 1 may additionally comprise an internal voice coder, and may comprise an internal data modem. Further, the processor 11 may comprise functionality to operate one or more software programs, which may be stored in memory and which may, among other things, cause the processor 11 to implement at least one embodiment including, for example, one or more of the functions described herein. For example, the processor 11 may operate a connectivity program, such as a conventional internet browser. The connectivity program may allow the electronic apparatus 10 to transmit and receive internet content, such as location-based content and/or other web page content, according to a Transmission Control Protocol (TCP), Internet Protocol (IP), User Datagram Protocol (UDP), Internet Message Access Protocol (IMAP), Post Office Protocol (POP), Simple Mail Transfer Protocol (SMTP), Wireless Application Protocol (WAP), Hypertext Transfer Protocol (HTTP), and/or the like, for example.

The electronic apparatus 10 may comprise a user interface for providing output and/or receiving input. The electronic apparatus 10 may comprise an output device 14. Output device 14 may comprise an audio output device, such as a ringer, an earphone, a speaker, and/or the like. Output device 14 may comprise a tactile output device, such as a vibration transducer, an electronically deformable surface, an electronically deformable structure, and/or the like. Output device 14 may comprise a visual output device, such as a display, a light, and/or the like. In at least one example embodiment, the apparatus causes display of information, the causation of display may comprise displaying the information on a display comprised by the apparatus, sending the information to a separate apparatus, and/or the like. For example, the apparatus may send the information to a separate display, to a computer, to a laptop, to a mobile apparatus, and/or the like. For example, the apparatus may be a server that causes display of the information by way of sending the information to a client apparatus that displays the information. In this manner, causation of display of the information may comprise sending one or more messages to the separate apparatus that comprise the information, streaming the information to the separate apparatus, and/or the like. The electronic apparatus may comprise an input device 13. Input device 13 may comprise a light sensor, a proximity sensor, a microphone, a touch sensor, a force sensor, a button, a keypad, a motion sensor, a magnetic field sensor, a camera, and/or the like. A touch sensor and a display may be characterized as a touch display. In an embodiment comprising a touch display, the touch display may be configured to receive input from a single point of contact, multiple points of contact, and/or the like. In such an embodiment, the touch display and/or the processor may determine input based, at least in part, on position, motion, speed, contact area, and/or the like. In at least one example embodiment, the apparatus receives an indication of an input. The apparatus may receive the indication from a sensor, a driver, a separate apparatus, and/or the like. The information indicative of the input may comprise information that conveys information indicative of the input, indicative of an aspect of the input indicative of occurrence of the input, and/or the like.

The electronic apparatus 10 may include any of a variety of touch displays including those that are configured to enable touch recognition by any of resistive, capacitive, infrared, strain gauge, surface wave, optical imaging, dispersive signal technology, acoustic pulse recognition or other techniques, and to then provide signals indicative of the location and other parameters associated with the touch. Additionally, the touch display may be configured to receive an indication of an input in the form of a touch event which may be defined as an actual physical contact between a selection object (e.g., a finger, stylus, pen, pencil, or other pointing device) and the touch display. Alternatively, a touch event may be defined as bringing the selection object in proximity to the touch display, hovering over a displayed object or approaching an object within a predefined distance, even though physical contact is not made with the touch display. As such, a touch input may comprise any input that is detected by a touch display including touch events that involve actual physical contact and touch events that do not involve physical contact but that are otherwise detected by the touch display, such as a result of the proximity of the selection object to the touch display. A touch display may be capable of receiving information associated with force applied to the touch screen in relation to the touch input. For example, the touch screen may differentiate between a heavy press touch input and a light press touch input. In at least one example embodiment, a display may display two-dimensional information, three-dimensional information and/or the like.

In example embodiments including a keypad, the keypad may comprise numeric (for example, 0-9) keys, symbol keys (for example, #, *), alphabetic keys, and/or the like for operating the electronic apparatus 10. For example, the keypad may comprise a conventional QWERTY keypad arrangement. The keypad may also comprise various soft keys with associated functions. In addition, or alternatively, the electronic apparatus 10 may comprise an interface device such as a joystick or other user input interface.

Input device 13 may comprise a media capturing element. The media capturing element may be any means for capturing an image, video, and/or audio for storage, display or transmission. For example, in at least one example embodiment in which the media capturing element is a camera module, the camera module may comprise a digital camera which may form a digital image file from a captured image. As such, the camera module may comprise hardware, such as a lens or other optical component(s), and/or software for creating a digital image file from a captured image. Alternatively, the camera module may comprise only the hardware for viewing an image, while a memory device of the electronic apparatus 10 stores instructions for execution by the processor 11 in the form of software for creating a digital image file from a captured image. In at least one example embodiment, the camera module may further comprise a processing element that is separate from processor 11 for processing data, such as image data. The camera module may provide data, such as image data, in one or more of various formats. In at least one example embodiment, the camera module comprises an encoder, a decoder, and/or the like for compressing and/or decompressing image data. The encoder and/or decoder may encode and/or decode according to a standard format, for example, a Joint Photographic Experts Group (JPEG) standard format.

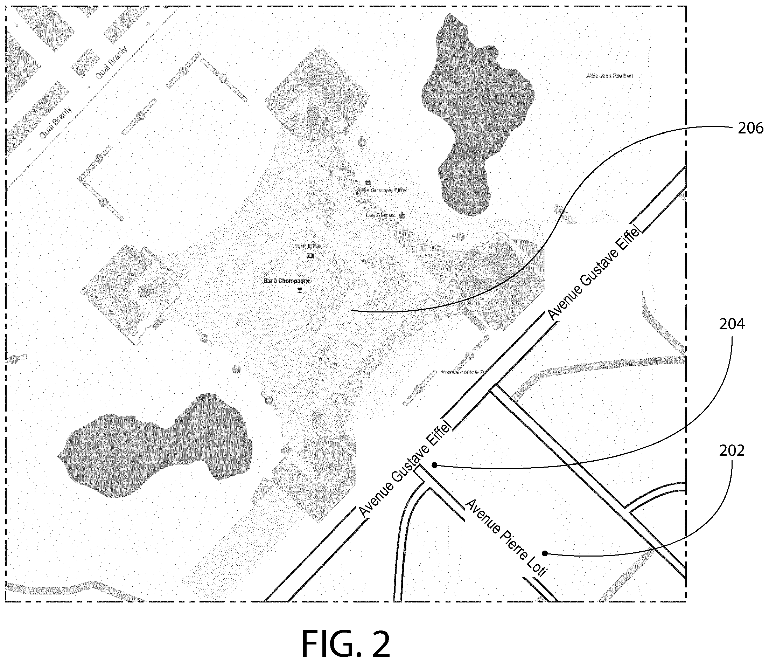

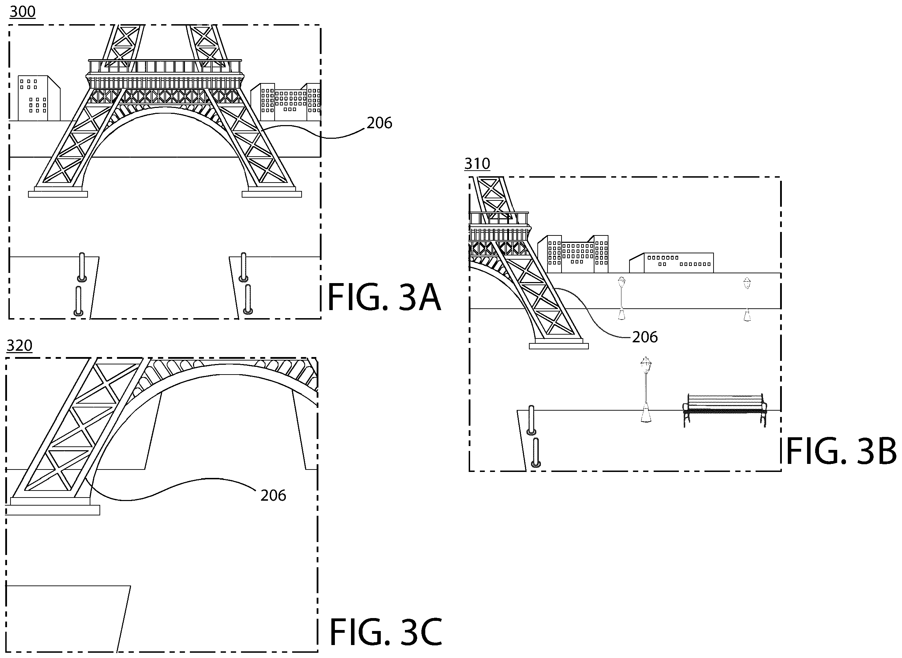

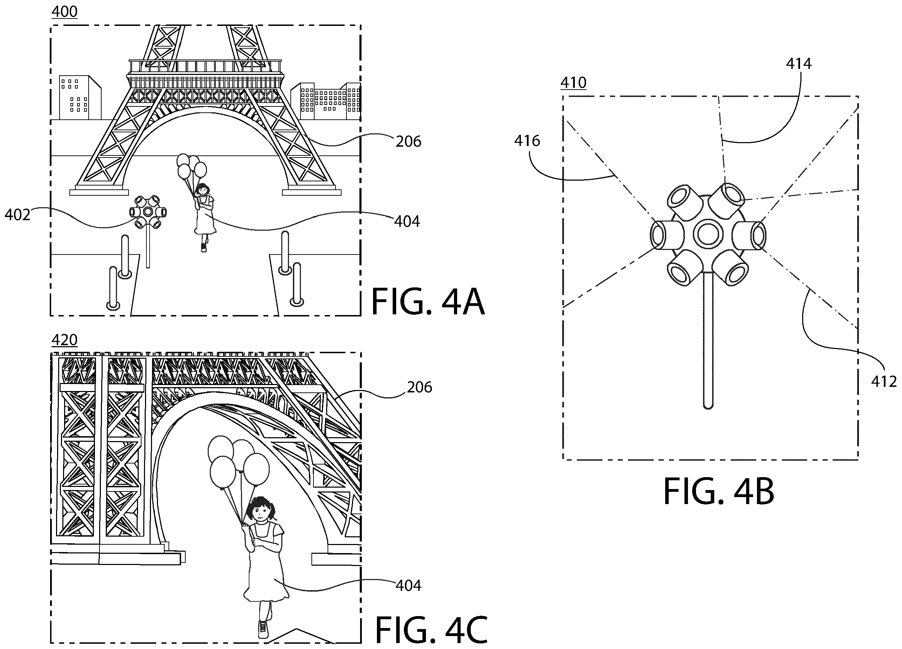

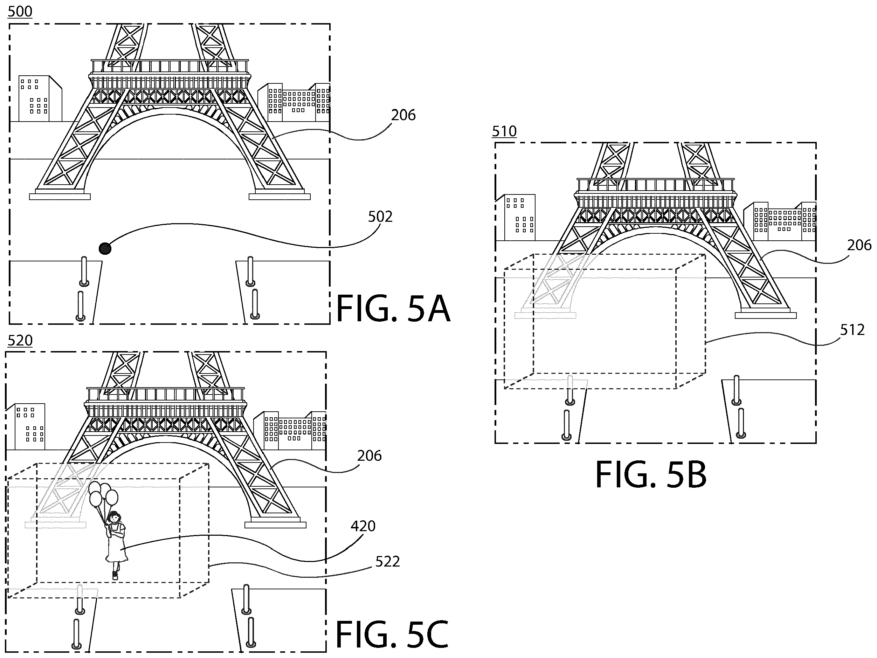

One or more example embodiments may include a geographic database. For example, the geographic database may comprise map information associated the example of FIG. 2, perspective images associated the examples of FIGS. 3A-3C, video content associated with the examples of FIGS. 4A-4C and FIGS. 5A-5C, information indicative of video navigational locations and/or video region indicators associated with the examples of FIGS. 5A-5C, and/or the like. For example, the geographic database may include node data records, road segment or link data records, point of interest (POI) data records, perspective image data records, video content data records, and other data records. More, fewer or different data records may be provided. In at least one example embodiment, the other data records include cartographic ("carto") data records, routing data, and maneuver data. One or more portions, components, areas, layers, features, text, and/or symbols of the POI or event data may be stored in, linked to, and/or associated with one or more of these data records. For example, one or more portions of the POI, event data, or recorded route information may be matched with respective map or geographic records via position or GPS data associations (such as using known or future map matching or geo-coding techniques), for example.

In at least one example embodiment, the road segment data records are links or segments representing roads, streets, or paths, as may be used in the calculated route or recorded route information for determination of one or more personalized routes. The node data records may be end points corresponding to the respective links or segments of the road segment data records. The road link data records and the node data records may represent a road network, such as used by vehicles, cars, and/or other entities. Alternatively, the geographic database may contain path segment and node data records or other data that represent pedestrian paths or areas in addition to or instead of the vehicle road record data, for example.

The road/link segments and nodes may be associated with attributes, such as geographic coordinates, street names, address ranges, speed limits, turn restrictions at intersections, and other navigation related attributes, as well as POIs, such as gasoline stations, hotels, restaurants, museums, stadiums, offices, automobile dealerships, auto repair shops, buildings, stores, parks, etc. The geographic database may include data about the POIs and their respective locations in the POI data records. The geographic database may also include data about places, such as cities, towns, or other communities, and other geographic features, such as bodies of water, mountain ranges, etc. Such place or feature data may be part of the POI data or may be associated with POIs or POI data records (such as a data point used for displaying or representing a position of a city). In addition, the geographic database may include and/or be associated with event data (e.g., traffic incidents, constructions, scheduled events, unscheduled events, etc.) associated with the POI data records or other records of the geographic database.

The geographic database may be maintained by a content provider (e.g., a map developer) in association with a services platform. By way of example, the map developer may collect geographic data to generate and enhance the geographic database. There may be different ways used by the map developer to collect data. These ways may include obtaining data from other sources, such as municipalities or respective geographic authorities. In addition, the map developer may employ field personnel to travel by vehicle along roads throughout the geographic region to observe features and/or record information about them, for example. Also, remote sensing, such as aerial or satellite photography, may be used.

The geographic database may be a master geographic database stored in a format that facilitates updating, maintenance, and development. For example, the master geographic database or data in the master geographic database may be in an Oracle spatial format or other spatial format, such as for development or production purposes. The Oracle spatial format or development/production database may be compiled into a delivery format, such as a geographic data files (GDF) format. The data in the production and/or delivery formats may be compiled or further compiled to form geographic database products or databases, which may be used in end user navigation apparatuses or systems.

Geographic data may be compiled (such as into a platform specification format (PSF) format) to organize and/or configure the data for performing navigation-related functions and/or services, such as route calculation, route guidance, map display, speed calculation, distance and travel time functions, and other functions, by a navigation apparatus, such as by an end user apparatus, for example. The navigation-related functions may correspond to vehicle navigation, pedestrian navigation, or other types of navigation. The compilation to produce the end user databases may be performed by a party or entity separate from the map developer. For example, a customer of the map developer, such as a navigation apparatus developer or other end user apparatus developer, may perform compilation on a received geographic database in a delivery format to produce one or more compiled navigation databases.

As mentioned above, a server side geographic database may be a master geographic database, but in alternate embodiments, a client side geographic database may represent a compiled navigation database that may be used in or with an end user apparatus to provide navigation and/or map-related functions. For example, the geographic database may be used with an end user apparatus to provide an end user with navigation features. In such an example, the geographic database may be downloaded or stored on the end user apparatus, such as in one or more applications, or the end user apparatus may access the geographic database through a wireless or wired connection (such as via a server and/or a communication network), for example.

In at least one example embodiment, the end user apparatus is one of an in-vehicle navigation system, a personal navigation device (PND)/personal navigation apparatus, a portable navigation device/portable navigation apparatus, a cellular telephone, a mobile phone, a personal digital assistant (PDA), a watch, a camera, a computer, and/or other apparatuses that may perform navigation-related functions, such as digital routing and map display. In at least one example embodiment, the navigation apparatus is a cellular telephone. An end user may use the end user apparatus for navigation and map functions such as guidance and map display, for example, and for determination of one or more personalized routes or route segments based on one or more calculated and recorded routes, according to exemplary embodiments.

FIG. 2 is a diagram illustrating a representation of map information according to at least one example embodiment. The example of FIG. 2 is merely an example and does not limit the scope of the claims. For example, map information may vary, representation configuration and/or design may vary, locations may vary, and/or the like.

In many circumstances, a user may interact with one or more programs, such as a mapping program, a navigation program, and/or the like throughout the day. Programs, such as an interactive mapping program, a navigation program, and/or the like, may provide particular features to a user of the program. For example, an interactive mapping program may offer navigation features, routing information, mapping information, recommendations, notifications, advertising, and/or the like. Such features may be referred to as map functions. For example, the user may utilize an interactive mapping program on a mobile apparatus, such as a cellular telephone, a tablet computer, and/or the like to identify navigation routes, investigate points of interest, view imagery associated with various map information, and/or the like. Programs such as these may cause display of visual information based, at least in part, on map functions, user inputs, stored data, retrieved data, and/or the like.

Often times, a user may desire to interact with specific portions of map information. For example, a user may desire to pan across a representation of map information to search for a particular point of interest, may desire to view imagery, such as satellite imagery, street-level imagery, etc., associated with a particular location, and/or the like. In this manner, it may be desirable to configure an apparatus such that the apparatus may identify a particular location, identify a particular portion of map information, cause display of a representation of map information in response to a user desire to view such information, and/or the like. In at least one example embodiment, an apparatus determines an interaction navigational location. In such an example embodiment, the interaction navigational location may be a location that a user desires to interact with, that the user has navigated to within an interactive mapping program, and/or the like. The interaction navigational location may, for example, identify a geographical location by way of a set of geographical coordinates, a street address, a business name, and/or the like. In some circumstances, an apparatus may determine the interaction navigational location by way of receipt of information indicative of an input that identifies the interaction navigational location, receipt of information indicative of a user input that designates the interaction navigational location, and/or the like. For example, a user may enter a particular address, may identify an interaction navigational location by way of an input that is at a position that corresponds with a representation of the interaction navigational location in a representation of map information, may click through various user interface elements of a street-level imagery viewer such that the user arrives at the interaction navigational location, and/or the like.

FIG. 2 is a diagram illustrating a representation of map information according to at least one example embodiment. The example of FIG. 2 depicts a representation of map information that comprises map information associated with location 202, location 204, and point of interest 206. In the example of FIG. 2, point of interest 206 is the iconic Eiffel Tower. As can be seen, location 202 and location 204 are two locations along Avenue Pierre Loti in Paris, France, and the distance between location 202 and point of interest 206 is greater than the distance between location 204 and point of interest 206. In this manner, an apparatus may determine an interaction navigational location to be location 202, location 204, and/or the like. For example, a user may identify location 202 as an interaction navigational location, the user may navigate to location 202 by way of various user interface elements associated with a street-level imagery viewer, and/or the like.

FIGS. 3A-3C are diagrams illustrating perspective images according to at least one example embodiment. The examples of FIGS. 3A-3C are merely examples and do not limit the scope of the claims. For example, perspective images may vary, viewing angles may vary, perspective image configuration, size, shape, and/or the like may vary, and/or the like.

As discussed previously, in many circumstances, a user may interact with one or more programs, such as a mapping program, a navigation program, and/or the like. In such circumstances, the user may desire to view imagery, such as street-level imagery, street-view imagery, images of points of interest, spatially arranged images that depict a perspective view of a particular location, images captured from a particular location, and/or the like. Such imagery may be referred to as perspective images. For example, street-view imagery may comprise a plurality of images that have been acquired and stitched together to form a cohesive, interactive panoramic image which may be panned, zoomed, rotated, and/or the like. A perspective image may, for example, be an image that depicts at least one view from a particular location. For example, a perspective image may be an image captured by a separate apparatus that is located at a particular location, geographic location, and/or the like. The perspective image may be of any aspect ratio, may capture visual information associated with any field of view, and/or the like. For example, the perspective image may be panoramic, wide angle, spherical, and/or the like. In this manner, the perspective image may depict one or more views from a particular location.

In order to facilitate user interaction with map information, it may be desirable to configure an apparatus such that a user of the apparatus may view such perspective images. For example, the user may desire to perceive imagery associated with a particular location, such as an interaction navigational location. In at least one example embodiment, an apparatus causes display of a perspective image. In such an example embodiment, the perspective image may depict a view of a portion of map information from the interaction navigational location. For example, the portion of the map information may be map information that is associated with the interaction navigational location, map information that is proximate to the interaction navigational location, and/or the like. For example, the perspective image may depict a view of a point of interest, a building, a street, and/or the like from a geographical location, from the interaction navigational location, and/or the like. In at least one example embodiment, the perspective image is an image that depicts street-level imagery associated with the interaction navigational location. For example, the street-level imagery may be captured by various camera modules, aggregated by one or more street-level imagery providers, and/or the like. In at least one example embodiment, an apparatus receives information indicative of the perspective image from a separate apparatus. For example, the apparatus may retrieve the perspective image from memory, a repository, and/or the like.

In some circumstances, an apparatus may generate a perspective image. In at least one example embodiment, an apparatus generates a perspective image based, at least in part, on the map information. For example, the apparatus may generate a model, such as a two-dimensional mode, a three-dimensional model, etc. based, at least in part, on at least a portion of the map information, and generate a perspective image based, at least in part, on the model. In another example, the apparatus may aggregate a plurality of images, such as street-level imagery, and generate a perspective image by way of stitching at least some of the plurality of images together, combining one or more of the plurality of images into a larger image, and/or the like.

FIG. 3A is a diagram illustrating a perspective image according to at least one example embodiment. The example of FIG. 3A illustrates perspective image 300, which depicts point of interest 206. Point of interest 206 of FIG. 3A corresponds with point of interest 206 of FIG. 2. As can be seen, perspective image 300 is a street-level image of the Eiffel Tower. In the example of FIG. 3A, perspective image 300 depicts what a user standing at location 202 of FIG. 2 may perceive when looking towards point of interest 206. As such, perspective image 300 depicts a view of at least a portion of map information from an interaction navigational location. In this manner, a user that is interacting with an interactive mapping program may utilize the interactive mapping program to explore the area surrounding point of interest 206. For example, the user may pan around the map information represented in the example of FIG. 2, may pan around various perspective images associated with various locations surrounding point of interest 206, such as location 202 of FIG. 2, location 204 of FIG. 2, and/or the like.

In some circumstances, a user may desire to perceive more than one view from a particular interaction navigational location, to perceive various portions of a perspective image, and/or the like. For example, a perspective image may be dimensioned, framed, cropped, oriented, etc. such that only a portion of the perspective image is displayed by an apparatus, such that only a portion of the perspective image is viewable, such that only a particular view in a particular direction is viewable by a user, and/or the like. In such an example, the perspective image may be a panoramic image that comprises visual information captured in a plurality of directions from a particular location. For example, the perspective image may comprise visual information that depicts a 180-degree view from the location, a three hundred sixty degree (360-degree) view from the location, a seven hundred twenty degree (720-degree) view from the location, a spherical view from the location, and/or the like. As such, it may be desirable to configure an apparatus such that a user of the apparatus may pan across the perspective image, change the view of the perspective image to a different view of the perspective image, and/or the like. For example, an apparatus may receive information indicative of a user input, such as a touch input, a gesture, gaze tracking, compass orientation, and/or the like, that indicates a particular view of the perspective image, a particular viewing angle within the perspective image, and/or the like. In at least one example embodiment, an apparatus determines a viewing angle of the perspective image. In this manner, the user may fully explore the perspective image and, thus, explore the environment surround a particular location, such as the interaction navigational location, by way of the perspective image.

FIG. 3B is a diagram illustrating perspective image according to at least one example embodiment. The example of FIG. 3B illustrates perspective image 310, which depicts point of interest 206. Point of interest 206 of FIG. 3A corresponds with point of interest 206 of FIG. 2 and point of interest 206 of FIG. 3A. As can be seen, perspective image 310 is a street-level image of the Eiffel Tower. In the example of FIG. 3B, perspective image 300 depicts what a user standing at location 202 of FIG. 2 may perceive when looking towards the right side of point of interest 206. For example, in some circumstances, perspective image 300 of FIG. 3A and perspective image 310 of FIG. 3B may be comprised by a single perspective image. In such an example, FIG. 3A may depict the perspective image at a particular viewing angle, and FIG. 3B may depict the same perspective image at a different viewing angle. For example, a user may view the portion of the perspective image depicted in FIG. 3A, indicate a desire to pan to the right, and subsequently view the portion of the perspective image depicted in FIG. 3B. In this manner, the user may view the perspective image at a particular viewing angle and, subsequently, view the perspective image at a different viewing angle. As such, perspective image 310 depicts a view of at least a portion of map information from the interaction navigational location, such as location 202 of FIG. 2. In this manner, a user that is interacting with an interactive mapping program may utilize the interactive mapping program to explore the area surrounding point of interest 206. For example, the user may pan around the map information represented in the example of FIG. 2, may pan around various perspective images associated with various locations surrounding point of interest 206, such as location 202 of FIG. 2, location 204 of FIG. 2, and/or the like.

As discussed previously, in some circumstances, a user may interact with an interactive mapping program in order to view various map information, perceive various perspective images, and/or the like. As such, the user may indicate a desire to transition from viewing perspective images that depict a view from an interaction navigational location to viewing different perspective images that depict a view form a different interaction navigational location. In this manner, the user may interact with the map information, explore a location by way of the map information and/or the perspective images, and/or the like. In such an example, the apparatus may receive information indicative of an input that indicates a user desire to view perspective images that depict a view from a different interaction navigational location. For example, the user may interact with one or more user interface elements in order to move within a set of perspective images, in order to indicate a desire to change the interaction navigational location to a different interaction navigational location, and/or the like.

FIG. 3C is a diagram illustrating perspective image according to at least one example embodiment. The example of FIG. 3C illustrates perspective image 320, which depicts point of interest 206. Point of interest 206 of FIG. 3C corresponds with point of interest 206 of FIG. 2, point of interest 206 of FIGS. 3A-3B, and/or the like. As can be seen, perspective image 320 is a street-level image of the Eiffel Tower. In the example of FIG. 3C, perspective image 320 depicts what a user standing at location 204 of FIG. 2 may perceive when looking towards point of interest 206. For example, a user may view perspective image 300 of FIG. 3A and desire to explore closer to point of interest 206, desire to move to a different interaction navigational location, desire to perceive a view of point of interest 206 from an interaction navigational location that is closer to point of interest 206, and/or the like. As can be seen, point of interest 206 appears larger in the example of FIG. 3C than in the example of FIG. 3A. As can be seen, the viewing angle of perspective image 320 is the same as the viewing angle of perspective image 300 of FIG. 3A, and is leftward of the viewing angle of perspective image 310 of FIG. 3B. As such, perspective image 320 depicts a view of at least a portion of map information from an interaction navigational location, such as location 204 of FIG. 2. In this manner, a user that is interacting with an interactive mapping program may utilize the interactive mapping program to explore the area surrounding point of interest 206. For example, the user may pan around the map information represented in the example of FIG. 2, may pan around various perspective images associated with various locations surrounding point of interest 206, such as location 202 of FIG. 2, location 204 of FIG. 2, and/or the like.

FIGS. 4A-4C are diagrams illustrating a video navigational location according to at least one example embodiment. The examples of FIGS. 4A-4C are merely examples and do not limit the scope of the claims. For example, video navigational location may vary, separate apparatus configuration and/or design may vary, video content configuration may vary, viewing angle may vary, and/or the like.

As discussed previously, in many circumstances, a user may interact with one or more programs, such as a mapping program, a navigation program, and/or the like. In such circumstances, the user may desire to perceive visual information indicative of the surroundings of a particular location, to visually explore an interaction navigational location, and/or the like. For example, a user may interact with street-view imagery that comprises a plurality of images that have been stitched together to form a panoramic image that depicts the environment surrounding a certain geographical location. In some circumstances, additional visual information that depicts at least a portion of the environment surrounding a geographical location may be available. For example, in such circumstances, video content that depicts a view from a particular location may be accessible, may be available to stream, and/or the like. In such circumstances, for example, it may be desirable to generate such street-view imagery such that a user that is interacting with the street-view imagery can readily identify that a region of the environment that is depicted in the street-view imagery is also depicted in, for example, video content which may be available.

In at least one example embodiment, video content that depicts a view from a location, such as an interaction navigational location, is available. For example, the video content may be video content captured by a camera module located at a particular geographical location that is represented by the interaction navigational location. The video content may be predetermined video content, streaming video content, and/or the like. For example, the video content may be received from a memory, from a separate apparatus, such as a repository, a video content provider, a server, and/or the like. In at least one example embodiment, the video content is received from a video capture apparatus. For example, the video content may be received form the video capture apparatus by way of one or more intermediate apparatuses, servers, video content providers, and/or the like. In this manner, the video content may be captured by one or more camera modules of the video capture apparatus. For example, the video content may be captured by a camera module of a stationary video capture apparatus, by a pan-tilt video capture apparatus, and/or the like.

FIG. 4A is a diagram illustrating a separate apparatus at a video navigational location according to at least one example embodiment. The example of FIG. 4A depicts video capture apparatus 402 and pedestrian 404 in relation to point of interest 206. As can be seen, the scene depicted in the example of FIG. 4A corresponds with the view of perspective image 300 in the example of FIG. 3A. As can be seen, video capture apparatus 402 is located at a location that is within the depicted view of perspective image 300 of FIG. 3A. For example, FIG. 4A may depict a scene that is viewable from location 202 of FIG. 2, and video capture apparatus 402 may be located at location 204 of FIG. 2. In the example of FIG. 4A, video capture apparatus 402 may capture video content that depicts point of interest 206, pedestrian 404, portions of the environment surrounding video capture apparatus 402, portions of the environment that are visible from the location of video capture apparatus 402, and/or the like.

Similar as described regarding the perspective images of FIG. 3A-3C, in some circumstances, the video content may be panoramic video content. In such circumstances, the video content may be captured by a plurality of camera modules of a video capture apparatus. In this manner, the panoramic video content may be video content that comprises a plurality of views of a portion of map information from a particular location, such as a geographical location, an interaction navigational location, and/or the like. In at least one example embodiment, the view of the portion of the map information from the video navigational location is a panoramic view of the portion of the map information from the video navigational location. The panoramic view may be a 180-degree view, a 360-degree view, a 720-degree view, a spherical view, and/or the like.

FIG. 4B is a diagram illustrating a separate apparatus at a video navigational location according to at least one example embodiment. The example of FIG. 4B depicts video capture apparatus 402 in relation to field of views 412, 414, and 416 of three different camera modules comprised by video capture apparatus 402. In the example of FIG. 4B, video capture apparatus 402 may capture panoramic video content that, in aggregate, depicts a spherical view of the environment surrounding video capture apparatus 402. As can be seen, video capture apparatus 402 corresponds with the video capture apparatus depicted in the example of FIG. 4A. In this manner, the camera module associated with field of view 414 may capture visual information that depicts point of interest 206 of FIG. 4A, the camera module associated with field of view 412 may capture visual information that depicts a portion of the environment to the right of video capture apparatus 402, and the camera module associated with field of view 416 may capture visual information that depicts a portion of the environment to the left of video capture apparatus 402. The various other camera modules may similarly capture various portions of the environment surrounding video capture apparatus 402 such that the video content captured by each camera module may be combined in a manner that creates a spherical field of view, video content that depicts the entirety of the environment surrounding video capture apparatus 402, and/or the like.

FIG. 4C is a diagram illustrating a frame of video content captured at a video navigational location according to at least one example embodiment. The example of FIG. 4C depicts frame 420 of video content captured by video capture apparatus 402 of FIG. 4A. As can be seen, frame 420 depicts point of interest 206 and pedestrian 404, which correspond with the point of interest and pedestrian depicted in the example of FIG. 4A. In this manner, frame 420 may have been captured by the camera module associated with field of view 414 of video capture apparatus 402, as depicted in the examples of FIG. 4A and FIG. 4B. In the example of FIG. 4C, frame 420 may be a portion of a larger frame, such as a portion of panoramic video content. In such an example, a user may pan around within the panoramic video content such that the user may perceive various views in various directions extending from a particular location.

FIGS. 5A-5C are diagrams illustrating a video region indicator according to at least one example embodiment. The examples of FIGS. 5A-5C are merely examples and do not limit the scope of the claims. For example, video region indicator configuration and/or design may vary, video region indicator size and/or shape may vary, video region indicator placement may vary, view angle may vary, and/or the like.

As discussed previously, in many circumstances, a user may desire to perceive various visual information that depicts one or more views from various locations. For example, as discussed regarding the examples of FIGS. 3A-3C, a user may desire to view various perspective images that depict views of map information from various interaction navigational locations. For example, the user may view perspective image 300 of FIG. 3A and desire to view additional information regarding point of interest 206 of FIG. 3A. As such, the user may navigate to a different interaction navigational location that is closer to point of interest 206 such that the user may perceive additional visual information associated with point of interest 206. As discussed previously, in some circumstances, video content may be associated with a particular interaction navigational location. For example, video content that depicts a view of at least a portion of the map information from the interaction navigational location may be available for viewing, streaming, and/or the like. In this manner, an interaction navigational location that is associated with available video content may be referred to as a video navigational location.

As described previously, a user may interact with street-view imagery that comprises a plurality of images that have been stitched together to form a panoramic image that depicts the environment surrounding a certain geographical location. In some circumstances, video content that depicts a view from a geographical location that is depicted in the street-view imagery may be available for a user of the apparatus to view, stream, download, and/or the like. In such circumstances, it may be desirable to provide a user with an intuitive manner in which to realize, recognize, quickly identify, etc. that video content is available at a particular video navigational location in relation to the panoramic image, the street-view imagery, and/or the like. In at least one example embodiment, an apparatus causes display of a video region indicator that indicates that video content is available at a video navigational location. In such an example embodiment, the video content may depict one or more views of a portion of the map information from the video navigational location. In this manner, the video region indicator may indicate the availability of video content captured by a camera module located at a geographical location that is represented by the video navigational location. For example, the video content may be captured by way of one or more camera modules of a video capture apparatus, and the video navigational location may be a location of the video capture apparatus while capturing the video content. In some circumstances, a position within a perspective image may depict the video navigational location, and the video region indicator may be displayed at the position within the perspective image. For instance, video capture apparatus 402 is depicted at a position that is perceivable within the scene of FIG. 4A, which corresponds with perspective image 300 of FIG. 3A. In this manner, a video region indicator may be displayed at a position within perspective image 300 of FIG. 3A that corresponds with the position of video capture apparatus 402 within the scene depicted in FIG. 4A. As such, the user may be able to readily perceive that video content is available at a video navigational location that is perceivable within the perspective image.

In such circumstances, it may be desirable to provide a user with an intuitive manner in which to indicate a desire to view the video content, to cause rendering of the video content, and/or the like. For example, many users may be familiar with exploring various interaction navigational locations by way of viewing perspective images that depict views from the various interaction navigational locations. As such, it may be desirable to configure an apparatus such that the user may intuitively navigate to an interaction navigational location that is associated with video content, to the video navigational location, and/or the like. In at least one example embodiment, an apparatus determines that the interaction navigational location has changed such the interaction navigational location corresponds with the video navigational location. In such an example embodiment, the apparatus may cause rendering of the video content based, at least in part, on the interaction navigational location corresponding with the video navigational location. In this manner, the display of the video region indicator at a position in the perspective image that depicts the location that the video content was captured may intuitively inform the user as to the availability of the video content, the vantage point of the video capture apparatus that captured the video content, and/or the like. As such, the user may perceive the video region indicator, navigate to the video navigational location, and cause rendering of the video content.

FIG. 5A is a diagram illustrating a video region indicator according to at least one example embodiment. The example of FIG. 5A depicts perspective image 500 in relation to video region indicator 502. In the example of FIG. 5A, perspective image 500 depicts point of interest 206, and corresponds with perspective image 300 of FIG. 3A. As can be seen, the position of video region indicator 502 relative to perspective image 500 corresponds with the position of video capture apparatus 402 relative to the scene depicted in FIG. 4A. In this manner, video region indicator 502 indicates that video content is available at a video navigational location that is depicted in perspective image 500. For example, perspective image 500 may depict a view of map information, including point of interest 206, from location 202 of FIG. 2, and the video navigational location may correspond with location 204 of FIG. 2. In such an example, the user may navigate from an interaction navigational location that corresponds with location 202 to an interaction navigational location that corresponds with location 204, and cause rendering of the video content based, at least in part, on the interaction navigational location that corresponds with location 204 corresponding with the video navigational location at which the video content is available.

As discussed previously, in some circumstances, the video content may be panoramic video content. In such circumstances, the rendering of the panoramic video content may comprise rendering of the panoramic video content at a viewing angle. For example, the panoramic video content may comprise video content that depicts a plurality of views from the video navigational location. In such an example, only a portion of the panoramic video content may be displayed at a given time, only a portion of the panoramic video content may be viewable by a user, only a single view of the panoramic video content may be rendered, and/or the like. As such, the user may pan within the panoramic video content such that the apparatus is caused to render a different view of the panoramic video content, render the panoramic video content at a different view angle, render a different portion of the panoramic video content, and/or the like. The user may pan within the panoramic video content by way of one or more inputs, gestures, and/or the like. In some circumstances, a user wearing a head mounted display may pan within the panoramic video content by way of turning the user's head, rotating the user's body, and/or the like. For example, a user facing north may perceive a northern view from a video navigational location. In this manner, in at least one example embodiment, the apparatus determines a viewing angle of the panoramic video content, and causes rendering of the panoramic video content at the viewing angle based, at least in part, on the determination of the viewing angle of the panoramic video content. In such an example, the user may turn to face south and, in response to the user turning to face south, the apparatus may cause rendering of a southern view from the video navigational location. In at least one example embodiment, an apparatus determines that the viewing angle changed to a different viewing angle, and causes rendering of the panoramic video content at the different viewing angle in response to the determination that the viewing angle changed to the different viewing angle.

In order to transition smoothly between display of a perspective image and rendering of panoramic video content, it may be desirable to align a viewing angle of the perspective image with a viewing angle of the panoramic video content. In at least one example embodiment, the viewing angle of the perspective image corresponds with the viewing angle of the panoramic video content. In this manner, the user may navigate from an interaction navigational location to a video navigational location and perceive a smooth transition from display of the perspective image at a viewing angle to rendering of the panoramic video content at the same viewing angle.

In some circumstances, the user may desire to discontinue viewing the rendered video content, may desire to navigate to a different interaction navigational location, may desire to perceive a perspective image associated with a different interaction navigational location, and/or the like. In such circumstances, it may be desirable to provide the user with an intuitive manner in which to cause termination of rendering by the apparatus. In some circumstances, the apparatus may receive information indicative of a user input that indicates a desire to terminate rendering of the video content and, in response to the user input, cause termination of rendering of the video content. In some circumstances, since the user may cause rendering, by the apparatus, of video content that is available at a video navigational location by navigating to the video navigational location, it may be intuitive for the user to cause termination of rendering, by the apparatus, of the video content by navigating away from the video navigational location. In at least one example embodiment, an apparatus determines that the interaction navigational location has changed such that the interaction navigational location fails to correspond with the video navigational location, and causes termination of rendering of the video content based, at least in part, on the determination that the interaction navigational location has changed such that the interaction navigational location fails to correspond with the video navigational location. In this manner, the user may navigate to a different interaction navigational location in order to indicate a desire to discontinue viewing the rendered video content. In another example, the entire duration of the video content may have been rendered, and the apparatus may cause termination of rendering of the video content based, at least in part, on the entirety of the video content having been rendered. In such an example, the apparatus may subsequently cause display of a perspective image that depicts a view of map information from the video navigational location. In this manner, the user may transition from viewing the video content that depicts a view of the map information from the video navigational location to viewing a perspective image that depicts a view of map information from the video navigational location.

In some circumstances, it may be desirable to indicate, to a user of an apparatus, a particular portion of map information that is depicted in video content. For example, the user may perceive perspective image 500 and video region indicator 502 of FIG. 5A and desire to know what portion of the map information that is depicted in perspective image 500 is captured in the video content, is perceivable within the video content, and/or the like. In at least one example embodiment, a video region indicator is a spatial video region indicator. The spatial video region indicator may, for example, indicate the portion of the map information within the perspective image which is depicted in the video content, which is viewable in the video content, and/or the like. For example, the spatial video region indicator may be a translucent prism that overlays at least a portion of the perspective image. In such an example, the portion of the perspective image may be representative of the portion of the map information depicted in the video content. The spatial video region indicator may be centered about the video navigational location, centered about a location of a camera module associated with the video content, and/or the like, such that the placement of the spatial video region indicator relative to the perspective image is indicative of the vantage point of the video content.

The size of the spatial video region indicator may be predetermined, may be determined based, at least in part, on one or more aspect of the video navigational location, the perspective image, and/or the like. In some circumstances, the spatial video region indicator may be sized based, at least in part, on the portion of the map information depicted in the video content. For example, in an area that is free of buildings and obstructions, a larger portion of the map information may be viewing and, thus, the spatial video region indicator may be larger than if the environment surrounding the video navigational location was full of visual obstructions.

The orientation of the spatial video region indicator may be predetermined, may be determined based, at least in part, on one or more aspect of the video navigational location, the perspective image, a viewing angle of the perspective image, and/or the like. In some circumstances, the spatial video region indicator may be oriented based, at least in part, on the portion of the map information depicted in the video content. For example, the spatial video region indicator may be rotated such that the spatial video region indicator aligns with a portion of the map information depicted in a perspective image, depicted in the video content, and/or the like.

The shape of the spatial video region indicator may be predetermined, may be determined based, at least in part, on one or more aspect of the video navigational location, the perspective image, a shape of the portion of the map information depicted in the video content, and/or the like. In some circumstances, the spatial video region indicator may be shaped based, at least in part, on the portion of the map information depicted in the video content. For example, the spatial video region indicator may be shaped such that the spatial video region indicator shape of the spatial video region indicator corresponds with a shape of the portion of the map information depicted in a perspective image, depicted in the video content, and/or the like.

FIG. 5B is a diagram illustrating a video region indicator according to at least one example embodiment. The example of FIG. 5B depicts perspective image 510 in relation to video region indicator 512. In the example of FIG. 5B, perspective image 510 depicts point of interest 206, and corresponds with perspective image 300 of FIG. 3A. As can be seen, the position of video region indicator 512 relative to perspective image 510 corresponds with the position of video capture apparatus 402 relative to the scene depicted in FIG. 4A. In this manner, video region indicator 512 indicates that video content is available at a video navigational location that is depicted in perspective image 510. For example, perspective image 510 may depict a view of map information, including point of interest 206, from location 202 of FIG. 2, and the video navigational location may correspond with location 204 of FIG. 2. In such an example, the user may navigate from an interaction navigational location that corresponds with location 202 to an interaction navigational location that corresponds with location 204, and cause rendering of the video content based, at least in part, on the interaction navigational location that corresponds with location 204 corresponding with the video navigational location at which the video content is available.

As can be seen, video region indicator 512 is a spatial video region indicator that is a translucent prism that indicates a portion of the map information depicted in perspective image 510 that is viewable in the video content. As can be seen, point of interest 206 is viewable through video region indicator 512. In this manner, video region indicator 512 conveys various information regarding the available video content at the video navigational location without obscuring the perspective image, the associated map information, and/or the like.

In some circumstances, a user may desire to perceive additional information regarding the video content that is available at the video navigational location. For example, the user may desire to preview the subject matter of the video content prior to navigating to the video navigational location such that the apparatus is caused to render the video content. In such an example, it may be desirable to configure the apparatus such the apparatus provides a preview of the video content to the user. In at least one example embodiment, an apparatus determines that video content is available at a video navigational location, selects a frame of the video content, and causes display of the video region indicator such that the video region indicator comprises the frame of the video content. In this manner, a user may perceive the frame of the video content and may identify whether the subject matter is of interest to the user. For example, the user may be interacting with street-view imagery that comprises a plurality of images that have been stitched together to form a panoramic image that depicts the environment surrounding a certain geographical location, a perceive the frame of the video content as being stitched together, blended, merged, etc. with the plurality of images of the street-view imagery. The selection of the frame of the video content may be based, at least in part, on the view of the portion of map information from the interaction navigational location, on at least one aspect of the perspective image, on a viewing angle of the perspective image, and/or the like. For example, the apparatus may select the frame by analyzing various visual properties of the perspective image, such as weather, brightness, contrast, saturation, and/or the like, and selecting a frame of the video content that most closely matches the visual properties of the perspective image. The frame of the video content may be integrated into a spatial video region indicator such that the frame appears to a user to be superimposed over one or more sides of the spatial video region indicator. For example, the frame of the video content may be integrated into the spatial video region indicator such that the frame constitutes a side of a translucent prism. In this manner, the subject matter of the video content may be indicated to the user without unnecessarily obstructing the perspective image, the depicted map information, and/or the like.

In some circumstances, it may be desirable to avoid selecting a frame of the video content that depicts an object, motion, etc. at or near an edge of the frame. For example, it may be desirable to avoid displaying only a portion of an object depicted in the frame such that the user perceives an abrupt transition between the frame of the video content and the perspective image that underlies the video region indicator that comprises the frame of the video. In this manner, the selection of the frame of the video content may be based, at least in part, on the absence of movement associated with at least one edge of the frame of the video content, the absence of an object at an edge of the frame, and/or the like. In at least one example embodiment, an apparatus filters out movement information from at least one edge of the frame of the video content. For example, the apparatus may manipulate the frame of the video content such that an object at the edge of the frame is removed. Such avoidance of selection of frames of the video content that depicts an object, motion, etc. at or near an edge of the frame may, for example, be based on user preference, on a predetermined setting, and/or the like.

In order to provide the user with a pleasing viewing experience, it may be desirable to cause display of the video region indicator comprising a frame of the video content such that the frame of the video content aligns with the perspective image underlying the video region indicator. In at least one example embodiment, an apparatus determines a viewing angle of the perspective image, selects a frame of the panoramic video content based, at least in part, on the perspective image and the viewing angle of the perspective image, and causes display of the video region indicator such that the video region indicator comprises a portion of the frame of the panoramic video content that corresponds with the viewing angle. In this manner, the apparatus may select a frame of the video content based, at least in part, on a viewing angle of the perspective image at the interaction navigational location, stitch the frame of the video content to the video region indicator, to a portion of the perspective image such that the frame of the video content visually blends with the surrounding perspective image, and/or the like.

In some circumstances, it may be desirable to indicate to the user that video content is available at a video navigational location by way of rendering of motion associated with the video region indicator. In at least one example embodiment, an apparatus selects a plurality of frames of the video content based, at least in part, on the view of the portion of map information from the interaction navigational location, and causes display of the video region indicator such that the video region indicator comprises the plurality of frames of the video content. In such an example embodiment, the causation of display of the video region indicator such that the video region indicator comprises the plurality of frames of the video content may comprise causation of rendering of the plurality of frames of the video content such that the plurality of frames of the video content at least partially correspond with the video region indicator. For example, the plurality of frames may be rendered in succession such that some movement within the video region indicator is perceivable by a user of an apparatus.

The selection of the plurality of frames of the video content may be based, at least in part, on the absence of movement associated with at least one edge of each frame of the plurality of frames of the video content, absence of an object at or near the edge of the frames of the video content, and/or the like. In at least one example embodiment, an apparatus filters out movement information from at least one edge of at least one frame of the plurality of frames of the video content. For example, the apparatus may manipulate a frame of the plurality of frames of the video content such that an object at the edge of the frame is removed. Such avoidance of selection of frames of the video content that depicts an object, motion, etc. at or near an edge of the frame may, for example, be based on user preference, on a predetermined setting, and/or the like.

FIG. 5C is a diagram illustrating a video region indicator according to at least one example embodiment. The example of FIG. 5C depicts perspective image 520 in relation to video region indicator 522, which comprises a representation of frame 420. In the example of FIG. 5C, perspective image 520 depicts point of interest 206, and corresponds with perspective image 300 of FIG. 3A. As can be seen, the position of video region indicator 522 relative to perspective image 520 corresponds with the position of video capture apparatus 402 relative to the scene depicted in FIG. 4A. In this manner, video region indicator 522 indicates that video content is available at a video navigational location that is depicted in perspective image 520. For example, perspective image 520 may depict a view of map information, including point of interest 206, from location 202 of FIG. 2, and the video navigational location may correspond with location 204 of FIG. 2. In such an example, the user may navigate from an interaction navigational location that corresponds with location 202 to an interaction navigational location that corresponds with location 204, and cause rendering of the video content based, at least in part, on the interaction navigational location that corresponds with location 204 corresponding with the video navigational location at which the video content is available.

As can be seen, video region indicator 522 is a spatial video region indicator that is a translucent prism that indicates a portion of the map information depicted in perspective image 520 that is viewable in the video content. As can be seen, point of interest 206 is viewable through video region indicator 522. In this manner, video region indicator 522 conveys various information regarding the available video content at the video navigational location without obscuring the perspective image, the associated map information, and/or the like. As stated previously, video region indicator 522 comprises a representation of frame 420. Frame 420 corresponds with frame 420 depicted in the example of FIG. 4C. As can be seen, the representation of frame 420 is stitched onto a side of video region indicator 522 and blends in with the portions of perspective image 520 that surround video region indicator 522, frame 420, and/or the like. In this manner, the portion of frame 420 depicted in relation to video region indicator 522 may be based, at least in part, on a viewing angle of perspective image 520, a viewing angle of the video content, and/or the like.

In some circumstances, it may be desirable to render audio associated with the video content. For example, the user may be viewing a perspective image and hear audio that is perceived by the user to emanate from a direction that corresponds with a direction to the video navigational location. In this manner, the user may be drawn to view the video content, to navigate to the video navigational location, and/or the like. In at least one example embodiment, the video content comprises audio information, and the apparatus causes rendering of the audio information based, at least in part, on the display of the video region indicator. In such an example embodiment, the audio information may be rendered such that the audio information is associated with the video navigational location. For example, the audio information may be rendered in a manner that enables a user to localize a perceived source of the audio information, to identify a video navigational location based, at least in part, on the rendered audio information, and/or the like.

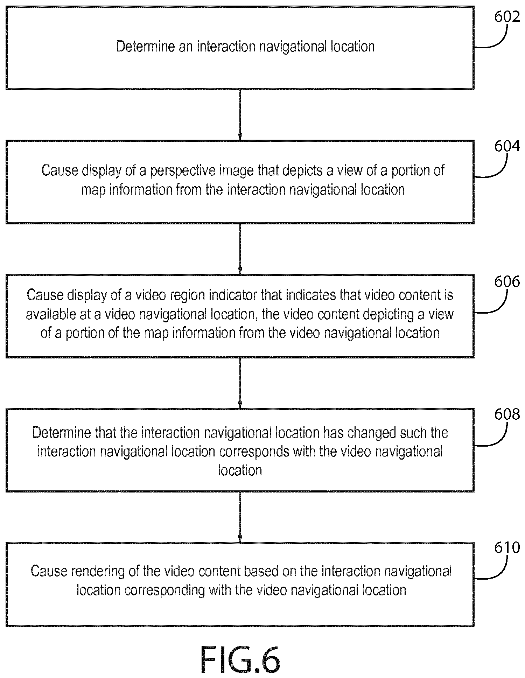

FIG. 6 is a flow diagram illustrating activities associated with causation of rendering of video content according to at least one example embodiment. In at least one example embodiment, there is a set of operations that corresponds with the activities of FIG. 6. An apparatus, for example electronic apparatus 10 of FIG. 1, or a portion thereof, may utilize the set of operations. The apparatus may comprise means, including, for example processor 11 of FIG. 1, for performance of such operations. In an example embodiment, an apparatus, for example electronic apparatus 10 of FIG. 1, is transformed by having memory, for example memory 12 of FIG. 1, comprising computer code configured to, working with a processor, for example processor 11 of FIG. 1, cause the apparatus to perform the set of operations of FIG. 6.

At block 602, the apparatus determines an interaction navigational location. The determination and the interaction navigational location may be similar as described regarding FIG. 2, FIGS. 3A-3C, FIGS. 4A-4C, and FIGS. 5A-5C.

At block 604, the apparatus causes display of a perspective image that depicts a view of a portion of map information from the interaction navigational location. The causation of display, the perspective image, and the view of the portion of map information from the interaction navigational location may be similar as described regarding FIG. 2, FIGS. 3A-3C, FIGS. 4A-4C, and FIGS. 5A-5C.

At block 606, the apparatus causes display of a video region indicator that indicates that video content is available at a video navigational location. In at least one example embodiment, the video content depicts a view of a portion of the map information from the video navigational location. The causation of display, the video region indicator, the video content, the video navigational location, and the view of the portion of the map information from the video navigational location may be similar as described regarding FIG. 2, FIGS. 3A-3C, FIGS. 4A-4C, and FIGS. 5A-5C.

At block 608, the apparatus determines that the interaction navigational location has changed such the interaction navigational location corresponds with the video navigational location. The determination may be similar as described regarding FIG. 2, FIGS. 3A-3C, FIGS. 4A-4C, and FIGS. 5A-5C.

At block 610, the apparatus causes rendering of the video content based, at least in part, on the interaction navigational location corresponding with the video navigational location. The causation of rendering may be similar as described regarding FIGS. 4A-4C and FIGS. 5A-5C.

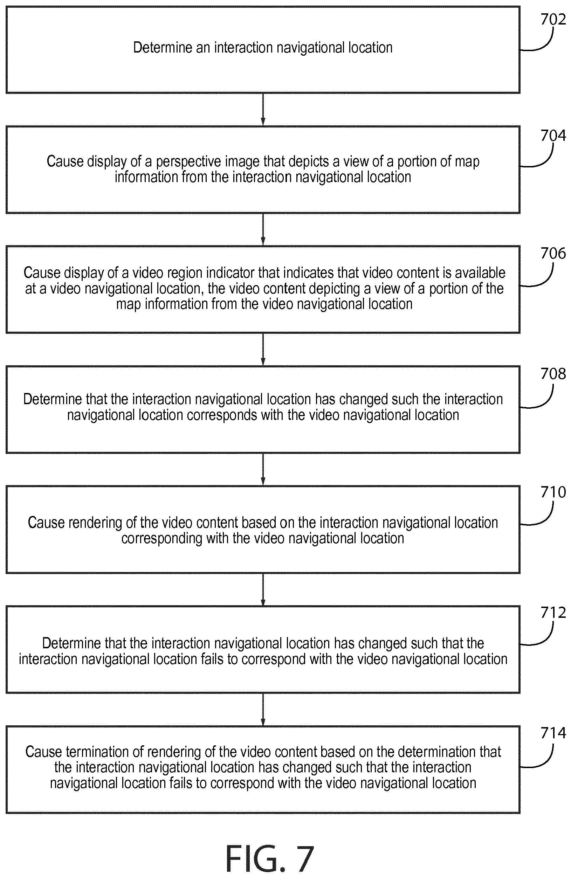

FIG. 7 is a flow diagram illustrating activities associated with causation of termination of rendering of video content according to at least one example embodiment. In at least one example embodiment, there is a set of operations that corresponds with the activities of FIG. 7. An apparatus, for example electronic apparatus 10 of FIG. 1, or a portion thereof, may utilize the set of operations. The apparatus may comprise means, including, for example processor 11 of FIG. 1, for performance of such operations. In an example embodiment, an apparatus, for example electronic apparatus 10 of FIG. 1, is transformed by having memory, for example memory 12 of FIG. 1, comprising computer code configured to, working with a processor, for example processor 11 of FIG. 1, cause the apparatus to perform the set of operations of FIG. 7.

As discussed previously, in some circumstances, it may be desirable to cause termination of rendering of the video content based, at least in part, on the determination that the interaction navigational location has changed such that the interaction navigational location fails to correspond with the video navigational location.

At block 702, the apparatus determines an interaction navigational location. The determination and the interaction navigational location may be similar as described regarding FIG. 2, FIGS. 3A-3C, FIGS. 4A-4C, and FIGS. 5A-5C.

At block 704, the apparatus causes display of a perspective image that depicts a view of a portion of map information from the interaction navigational location. The causation of display, the perspective image, and the view of the portion of map information from the interaction navigational location may be similar as described regarding FIG. 2, FIGS. 3A-3C, FIGS. 4A-4C, and FIGS. 5A-5C.

At block 706, the apparatus causes display of a video region indicator that indicates that video content is available at a video navigational location. In at least one example embodiment, the video content depicts a view of a portion of the map information from the video navigational location. The causation of display, the video region indicator, the video content, the video navigational location, and the view of the portion of the map information from the video navigational location may be similar as described regarding FIG. 2, FIGS. 3A-3C, FIGS. 4A-4C, and FIGS. 5A-5C.

At block 708, the apparatus determines that the interaction navigational location has changed such the interaction navigational location corresponds with the video navigational location. The determination may be similar as described regarding FIG. 2, FIGS. 3A-3C, FIGS. 4A-4C, and FIGS. 5A-5C.

At block 710, the apparatus causes rendering of the video content based, at least in part, on the interaction navigational location corresponding with the video navigational location. The causation of rendering may be similar as described regarding FIGS. 4A-4C and FIGS. 5A-5C.

At block 712, the apparatus determines that the interaction navigational location has changed such that the interaction navigational location fails to correspond with the video navigational location. The determination may be similar as described regarding FIG. 2, FIGS. 3A-3C, FIGS. 4A-4C, and FIGS. 5A-5C.

At block 714, the apparatus causes termination of rendering of the video content based, at least in part, on the determination that the interaction navigational location has changed such that the interaction navigational location fails to correspond with the video navigational location. The causation of termination of rendering may be similar as described regarding FIGS. 4A-4C and FIGS. 5A-5C.

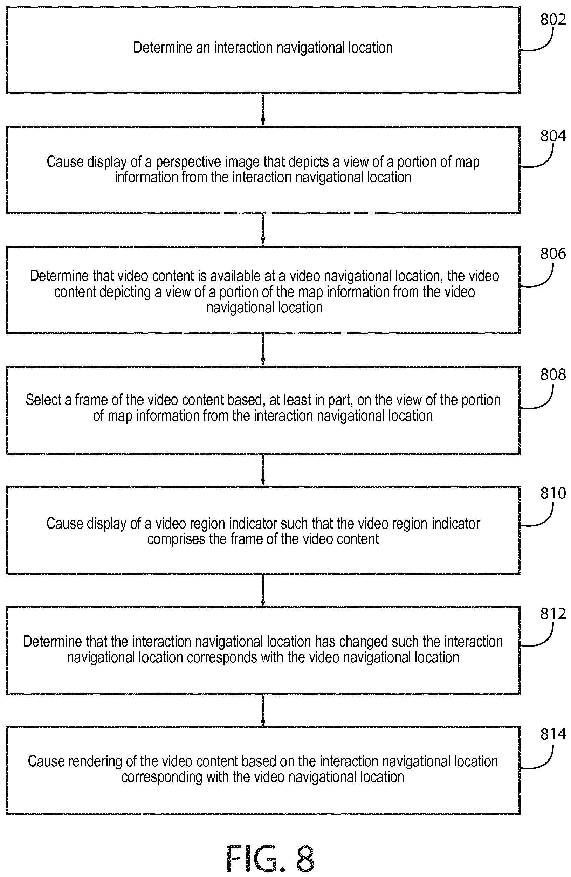

FIG. 8 is a flow diagram illustrating activities associated with causation of display of a video region indicator such that the video region indicator comprises at least one frame of video content according to at least one example embodiment. In at least one example embodiment, there is a set of operations that corresponds with the activities of FIG. 8. An apparatus, for example electronic apparatus 10 of FIG. 1, or a portion thereof, may utilize the set of operations. The apparatus may comprise means, including, for example processor 11 of FIG. 1, for performance of such operations. In an example embodiment, an apparatus, for example electronic apparatus 10 of FIG. 1, is transformed by having memory, for example memory 12 of FIG. 1, comprising computer code configured to, working with a processor, for example processor 11 of FIG. 1, cause the apparatus to perform the set of operations of FIG. 8.

As discussed previously, in some circumstances, it may be desirable to cause display of a video region indicator such that the video region indicator comprises the frame of the video content.

At block 802, the apparatus determines an interaction navigational location. The determination and the interaction navigational location may be similar as described regarding FIG. 2, FIGS. 3A-3C, FIGS. 4A-4C, and FIGS. 5A-5C.

At block 804, the apparatus causes display of a perspective image that depicts a view of a portion of map information from the interaction navigational location. The causation of display, the perspective image, and the view of the portion of map information from the interaction navigational location may be similar as described regarding FIG. 2, FIGS. 3A-3C, FIGS. 4A-4C, and FIGS. 5A-5C.

At block 806, the apparatus determines that video content is available at a video navigational location, the video content depicting a view of a portion of the map information from the video navigational location. The determination, the video content, the video navigational location, and the view of the portion of the map information from the video navigational location may be similar as described regarding FIG. 2, FIGS. 3A-3C, FIGS. 4A-4C, and FIGS. 5A-5C.

At block 808, the apparatus selects a frame of the video content based, at least in part, on the view of the portion of map information from the interaction navigational location. The selection and the frame of the video content may be similar as described regarding FIGS. 4A-4C and FIGS. 5A-5C.

At block 810, the apparatus causes display of a video region indicator such that the video region indicator comprises the frame of the video content. The causation of display and the video region indicator may be similar as described regarding FIGS. 4A-4C and FIGS. 5A-5C.

At block 812, the apparatus determines that the interaction navigational location has changed such the interaction navigational location corresponds with the video navigational location. The determination may be similar as described regarding FIG. 2, FIGS. 3A-3C, FIGS. 4A-4C, and FIGS. 5A-5C.

At block 814, the apparatus causes rendering of the video content based, at least in part, on the interaction navigational location corresponding with the video navigational location. The causation of rendering may be similar as described regarding FIGS. 4A-4C and FIGS. 5A-5C.

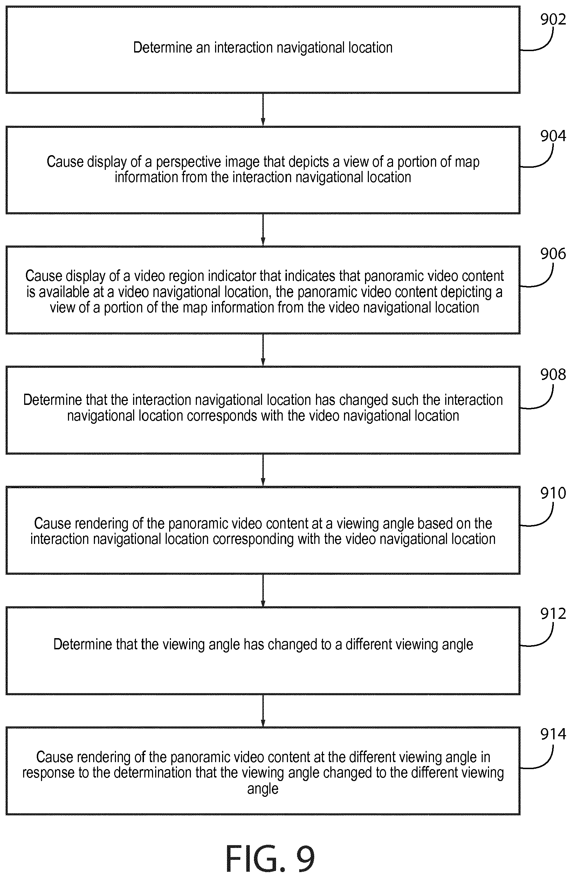

FIG. 9 is a flow diagram illustrating activities associated with causation of rendering of panoramic video content at a viewing angle according to at least one example embodiment. In at least one example embodiment, there is a set of operations that corresponds with the activities of FIG. 9. An apparatus, for example electronic apparatus 10 of FIG. 1, or a portion thereof, may utilize the set of operations. The apparatus may comprise means, including, for example processor 11 of FIG. 1, for performance of such operations. In an example embodiment, an apparatus, for example electronic apparatus 10 of FIG. 1, is transformed by having memory, for example memory 12 of FIG. 1, comprising computer code configured to, working with a processor, for example processor 11 of FIG. 1, cause the apparatus to perform the set of operations of FIG. 9.

As discussed previously, in some circumstances, it may be desirable to cause rendering of panoramic video content at various viewing angles.

At block 902, the apparatus determines an interaction navigational location. The determination and the interaction navigational location may be similar as described regarding FIG. 2, FIGS. 3A-3C, FIGS. 4A-4C, and FIGS. 5A-5C.

At block 904, the apparatus causes display of a perspective image that depicts a view of a portion of map information from the interaction navigational location. The causation of display, the perspective image, and the view of the portion of map information from the interaction navigational location may be similar as described regarding FIG. 2, FIGS. 3A-3C, FIGS. 4A-4C, and FIGS. 5A-5C.

At block 906, the apparatus causes display of a video region indicator that indicates that panoramic video content is available at a video navigational location. In at least one example embodiment, the panoramic video content depicts at least one view of a portion of the map information from the video navigational location. The causation of display, the video region indicator, the panoramic video content, the video navigational location, and the at least one view of the portion of the map information from the video navigational location may be similar as described regarding FIG. 2, FIGS. 3A-3C, FIGS. 4A-4C, and FIGS. 5A-5C.

At block 908, the apparatus determines that the interaction navigational location has changed such the interaction navigational location corresponds with the video navigational location. The determination may be similar as described regarding FIG. 2, FIGS. 3A-3C, FIGS. 4A-4C, and FIGS. 5A-5C.

At block 910, the apparatus causes rendering of the panoramic video content at a viewing angle based, at least in part, on the interaction navigational location corresponding with the video navigational location. The causation of rendering of the panoramic video content at the viewing angle may be similar as described regarding FIG. 2, FIGS. 3A-3C, FIGS. 4A-4C, and FIGS. 5A-5C.

At block 912, the apparatus determines that the viewing angle has changed to a different viewing angle. The determination and the different viewing angle may be similar as described regarding FIG. 2, FIGS. 3A-3C, FIGS. 4A-4C, and FIGS. 5A-5C.

At block 914, the apparatus causes rendering of the panoramic video content at the different viewing angle in response to the determination that the viewing angle changed to the different viewing angle. The causation of rendering of the panoramic video content at the different viewing angle may be similar as described regarding FIG. 2, FIGS. 3A-3C, FIGS. 4A-4C, and FIGS. 5A-5C.

One or more example embodiments may be implemented in software, hardware, application logic or a combination of software, hardware, and application logic. The software, application logic and/or hardware may reside on the apparatus, a separate apparatus, or a plurality of separate apparatuses. If desired, part of the software, application logic and/or hardware may reside on the apparatus, part of the software, application logic and/or hardware may reside on a separate apparatus, and part of the software, application logic and/or hardware may reside on a plurality of separate apparatuses. In an example embodiment, the application logic, software or an instruction set is maintained on any one of various computer-readable media.

If desired, the different functions discussed herein may be performed in a different order and/or concurrently with each other. For example, block 808 of FIG. 8 may be performed after block 810 of FIG. 8. Furthermore, if desired, one or more of the above-described functions may be optional or may be combined. For example, block 602 of FIG. 6 may be optional and/or combined with block 604 of FIG. 6.

Although various aspects of the present subject matter are set out in the independent claims, other aspects of the present subject matter comprise other combinations of features from the described example embodiments and/or the dependent claims with the features of the independent claims, and not solely the combinations explicitly set out in the claims.

It is also noted herein that while the above describes example embodiments, these descriptions should not be viewed in a limiting sense. Rather, there are variations and modifications which may be made without departing from the scope of the present subject matter.

## Claims

1. A method comprising:
determining an interaction navigational location;
causing display of a perspective image (300, 310, 320, 500, 510, 520) that depicts a view of a portion of map information from the interaction navigational location;
causing display of a video region indicator (502, 512, 522) that indicates that video content, which is panoramic video content and the video content is captured by a plurality of camera modules of a video capture apparatus (402), is available at a video navigational location, the video content depicting a view of a portion of the map information from the video navigational location;
determining that the interaction navigational location has changed such the interaction navigational location corresponds with the video navigational location; and
causing rendering of the video content, such that a viewing angle of the perspective image corresponds with the viewing angle of the panoramic video content, based, at least in part, on the interaction navigational location corresponding with the video navigational location.

2. The method of claim 1, wherein the determination of the interaction navigational location comprises receipt of information indicative of an input that identifies the interaction navigational location.

3. The method of any of claims 1-2, further comprising:
determining that the interaction navigational location has changed such that the interaction navigational location fails to correspond with the video navigational location; and
causing termination of rendering of the video content.

4. The method of any of claims 1-3, wherein the plurality of camera modules of the video capture apparatus (402) is located at a geographical location that is represented by the video navigational location.

5. The method of any of claims 1-4, wherein a position within the perspective image (300, 310, 320, 500, 510, 520) depicts the video navigational location, and the video region indicator (502, 512, 522) is displayed at the position within the perspective image (300, 310, 320, 500, 510, 520).

6. The method of any of claims 1-5, wherein the video region indicator (502, 512, 522) is a spatial video region indicator.

7. The method of claim 6, wherein the spatial video region indicator (502, 512, 522) is a translucent prism that overlays at least a portion of the perspective image (300, 310, 320, 500, 510, 520).

8. The method of claim 7, wherein the portion of the perspective image (300, 310, 320, 500, 510, 520) is representative of the portion of the map information depicted in the video content.

9. The method of any of claims 1-8, wherein the causation of display of the video region indicator (502, 512, 522) comprises:
determining that video content is available at a video navigational location, the video content depicting the view of the portion of the map information from the video navigational location;
selecting a frame of the video content based, at least in part, on the view of the portion of map information from the interaction navigational location; and
causing display of the video region indicator (502, 512, 522) such that the video region indicator (502, 512, 522) comprises the frame of the video content.

10. The method of any of claims 1-8, wherein the causation of display of the video region indicator (502, 512, 522) comprises:
determining that video content is available at a video navigational location, the video content depicting the view of the portion of the map information from the video navigational location;
selecting a plurality of frames of the video content based, at least in part, on the view of the portion of map information from the interaction navigational location; and
causing display of the video region indicator (502, 512, 522) such that the plurality of frames of the video content are rendered in relation to the video region indicator (502, 512, 522).

11. The method of any of claims 1-10, wherein the rendering of the panoramic video content comprises rendering of the panoramic video content at a viewing angle, and further comprising:
determining that the viewing angle changed to a different viewing angle; and
causing rendering of the panoramic video content at the different viewing angle in response to the determination that the viewing angle changed to the different viewing angle.

12. The method of any of claims 1-11, wherein the video content comprises audio information, and further comprising causing rendering of the audio information based, at least in part, on the display of the video region indicator (502, 512, 522).

13. An apparatus comprising means for performing the method of any of the preceding claims.

14. The apparatus of Claim 13, wherein the means for performing the method comprise at least one processor and at least one memory, the memory comprising machine-readable instructions, that when executed cause the apparatus to perform the method of any of claims 1-12.

15. At least one computer readable medium comprising instructions that, when executed by a computer, causes the computer to perform the method of any of claims 1-12.

## Patentansprüche

1. Verfahren, umfassend:
Bestimmen eines Interaktionsnavigationsortes;
Veranlassen einer Anzeige eines perspektivischen Bildes (300, 310, 320, 500, 510, 520), das eine Ansicht eines Abschnitts von Karteninformationen von dem Interaktionsnavigationsort veranschaulicht;
Veranlassen einer Anzeige eines Videobereichsindikators (502, 512, 522), der anzeigt, dass Videoinhalt, der ein Panoramavideoinhalt ist - wobei der Videoinhalt durch mehrere Kameramodule einer Videoaufnahmeeinrichtung (402) aufgenommen ist, an einem Videonavigationsort verfügbar ist, wobei der Videoinhalt eine Ansicht eines Abschnitts der Karteninformationen von dem Videonavigationsort darstellt;
Bestimmen, ob der Interaktionsnavigationsort sich verändert hat, so dass der Interaktionsnavigationsort dem Videonavigationsort entspricht; und
Veranlassen eines Renderns des Videoinhalts zumindest teilweise auf der Grundlage des Interaktionsnavigationsortes, der dem Videonavigationsort entspricht, so dass ein Betrachtungswinkel des perspektivischen Bildes dem Betrachtungswinkel des Panoramavideoinhalts entspricht.

2. Verfahren nach Anspruch 1, wobei das Bestimmen des Interaktionsnavigationsortes einen Empfang von Informationen umfasst, die eine Eingabe kennzeichnen, die den Interaktionsnavigationsort identifiziert.

3. Verfahren nach einem der Ansprüche 1-2, ferner umfassend:
Bestimmen, ob der Interaktionsnavigationsort sich verändert hat, so dass der Interaktionsnavigationsort dem Videonavigationsort nicht entsprechen kann; und
Veranlassen eines Abbruchs des Renderns des Videoinhalts.

4. Verfahren nach einem der Ansprüche 1-3, wobei die mehreren Kameramodule der Videoaufnahmeeinrichtung (402) an einem geographischen Ort angeordnet werden, der durch den Videonavigationsort repräsentiert ist.

5. Verfahren nach einem der Ansprüche 1-4, wobei eine Position in dem perspektivischen Bild (300, 310, 320, 500, 510, 520) den Videonavigationsort darstellt, und der Videobereichsindikator (502, 512, 522) an der Position in dem perspektivischen Bild (300, 310, 320, 500, 510, 520) angezeigt wird.

6. Verfahren nach einem der Ansprüche 1-5, wobei der Videobereichsindikator (502, 512, 522) ein räumlicher Videobereichsindikator ist.

7. Verfahren nach Anspruch 6, wobei der räumliche Videobereichsindikator (502, 512, 522) ein lichtdurchlässiges Prisma ist, das wenigstens einen Abschnitt des perspektivischen Bildes (300, 310, 320, 500, 510, 520) überlappt.

8. Verfahren nach Anspruch 7, wobei der Abschnitt des perspektivischen Bildes (300, 310, 320, 500, 510, 520) den in dem Videoinhalt dargestellten Abschnitt der Karteninformationen repräsentiert.

9. Verfahren nach einem der Ansprüche 1-8, wobei das Veranlassen der Anzeige des Videobereichsindikators (502, 512, 522) umfasst:
Bestimmen der Verfügbarkeit eines Videoinhalts an einem Videonavigationsort, wobei der Videoinhalt die Ansicht des Abschnitts der Karteninformationen von dem Videonavigationsort darstellt;
Auswählen eines Einzelbildes des Videoinhalts zumindest teilweise auf der Grundlage der Ansicht des Abschnitts von Karteninformationen von dem Interaktionsnavigationsort; und
Veranlassen einer Anzeige des Videobereichsindikators (502, 512, 522), so dass der Videobereichsindikator (502, 512, 522) das Einzelbild des Videoinhalts aufweist.

10. Verfahren nach einem beliebigen der Ansprüche 1-8, wobei das Veranlassen der Anzeige des Videobereichsindikators (502, 512, 522) umfasst:
Bestimmen der Verfügbarkeit eines Videoinhalts an einem Videonavigationsort, wobei der Videoinhalt die Ansicht des Abschnitts der Karteninformationen von dem Videonavigationsort darstellt;
Auswählen mehrerer Einzelbilder des Videoinhalts zumindest teilweise auf der Grundlage der Ansicht des Abschnitts von Karteninformationen von dem Interaktionsnavigationsort; und
Veranlassen einer Anzeige des Videobereichsindikators (502, 512, 522), so dass die mehreren Einzelbilder des Videoinhalts in Bezug auf den Videobereichsindikator (502, 512, 522) gerendert werden.

11. Verfahren nach einem beliebigen der Ansprüche 1-10, wobei das Rendern des Panoramavideoinhalts ein Rendern des Panoramavideoinhalts unter einem Betrachtungswinkel umfasst, und ferner umfasst:
Bestimmen, ob sich der Betrachtungswinkel zu einem unterschiedlichen Betrachtungswinkel verändert hat; und Veranlassen eines Renderns des Panoramavideoinhalts unter dem unterschiedlichen Betrachtungswinkel in Reaktion auf die Ermittlung, dass der Betrachtungswinkel sich zu dem unterschiedlichen Betrachtungswinkel verändert hat.

12. Verfahren nach einem beliebigen der Ansprüche 1-11, wobei der Videoinhalt Audioinformationen aufweist, ferner mit dem Schritt eines Veranlassens eines Renderns der Audioinformationen zumindest teilweise auf der Grundlage der Anzeige des Videobereichsindikators (502, 512, 522).

13. Einrichtung, die Mittel zur Durchführung des Verfahrens nach einem der vorhergehenden Ansprüche aufweist.

14. Vorrichtung nach Anspruch 13, wobei die Mittel zur Durchführung des Verfahrens wenigstens einen Prozessor und wenigstens einen Speicher beinhalten, wobei der Speicher maschinenlesbare Befehle aufweist, die bei Ausführung die Vorrichtung dazu veranlassen, das Verfahren nach einem der Ansprüche 1-12 durchzuführen.

15. Wenigstens ein computerlesbares Medium, das Befehle aufweist, die bei Ausführung durch einen Computer den Computer dazu veranlassen, das Verfahren nach einem der Ansprüche 1-12 durchzuführen.

## Revendications

1. Procédé, comprenant :
la détermination d'une localisation navigationnelle d'interaction ;
l'entraînement de l'affichage d'une image en perspective (300, 310, 320, 500, 510, 520) qui illustre une vue d'une portion d'informations cartographiques provenant de la localisation navigationnelle d'interaction ;
l'entraînement de l'affichage d'un indicateur de région vidéo (502, 512, 522) qui indique qu'un contenu vidéo, qui est un contenu vidéo panoramique, et le contenu vidéo est capturé par une pluralité de modules de caméra d'un appareil de capture vidéo (402), est disponible à une localisation navigationnelle vidéo, le contenu vidéo illustrant une vue d'une portion des informations cartographiques provenant de la localisation navigationnelle vidéo ;
la détermination que la localisation navigationnelle d'interaction a changé, de telle sorte que la localisation navigationnelle d'interaction corresponde à la localisation navigationnelle vidéo ; et
l'entraînement du rendu du contenu vidéo, de telle sorte qu'un angle de visionnement de l'image en perspective corresponde à l'angle de visionnement du contenu vidéo panoramique, sur la base, au moins en partie, de la localisation navigationnelle d'interaction correspondant à la localisation navigationnelle vidéo.

2. Procédé selon la revendication 1, dans lequel la détermination de la localisation navigationnelle d'interaction comprend la réception d'informations indicatives d'une entrée qui identifie la localisation navigationnelle d'interaction.

3. Procédé selon l'une quelconque des revendications 1 et 2, comprenant en outre :
la détermination que la localisation navigationnelle d'interaction a changé de telle sorte que la localisation navigationnelle d'interaction ne puisse pas à correspondre à la localisation navigationnelle vidéo ; et
l'entraînement de la terminaison du rendu du contenu vidéo.

4. Procédé selon l'une quelconque des revendications 1 à 3, dans lequel la pluralité de modules de caméra de l'appareil de capture vidéo (402) est localisée à une localisation géographique qui est représentée par la localisation navigationnelle vidéo.

5. Procédé selon l'une quelconque des revendications 1 à 4, dans lequel une position à l'intérieur de l'image en perspective (300, 310, 320, 500, 510, 520) illustre la localisation navigationnelle vidéo, et l'indicateur de région vidéo (502, 512, 522) est affiché à la position à l'intérieur de l'image en perspective (300, 310, 320, 500, 510, 520).

6. Procédé selon l'une quelconque des revendications 1 à 5, dans lequel l'indicateur de région vidéo (502, 512, 522) est un indicateur spatial de région vidéo.

7. Procédé selon la revendication 6, dans lequel l'indicateur spatial de région vidéo (502, 512, 522) est un prisme translucide qui recouvre au moins une portion de l'image en perspective (300, 310, 320, 500, 510, 520).

8. Procédé selon la revendication 7, dans lequel la portion de l'image en perspective (300, 310, 320, 500, 510, 520) est représentative de la portion des informations cartographiques illustrée dans le contenu vidéo.

9. Procédé selon l'une quelconque des revendications 1 à 8, dans lequel l'entraînement de l'affichage de l'indicateur de région vidéo (502, 512, 522) comprend :
la détermination qu'un contenu vidéo est disponible à une localisation navigationnelle vidéo, le contenu vidéo illustrant la vue de la portion des informations cartographiques provenant de la localisation navigationnelle vidéo ;
la sélection d'un photogramme du contenu vidéo sur la base, au moins en partie, de la vue de la portion d'informations cartographiques provenant de la localisation navigationnelle d'interaction ; et
l'entraînement de l'affichage de l'indicateur de région vidéo (502, 512, 522) de telle sorte que l'indicateur de région vidéo (502, 512, 522) comprenne le photogramme du contenu vidéo.

10. Procédé selon l'une quelconque des revendications 1 à 8, dans lequel l'entraînement de l'affichage de l'indicateur de région vidéo (502, 512, 522) comprend :
la détermination qu'un contenu vidéo est disponible à une localisation navigationnelle vidéo, le contenu vidéo illustrant la vue de la portion des informations cartographiques provenant de la localisation navigationnelle vidéo ;
la sélection d'une pluralité de photogrammes du contenu vidéo sur la base, au moins en partie, de la vue de la portion de informations cartographiques provenant de la localisation navigationnelle d'interaction ; et
l'entraînement de l'affichage de l'indicateur de région vidéo (502, 512, 522) de telle sorte que la pluralité de photogrammes du contenu vidéo soient rendus par rapport à l'indicateur de région vidéo (502, 512, 522).

11. Procédé selon l'une quelconque des revendications 1 à 10, dans lequel le rendu du contenu vidéo panoramique comprend le rendu du contenu vidéo panoramique à un angle de visionnement, et comprenant en outre :
la détermination que l'angle de visionnement passe à un angle de visionnement différent ; et
l'entraînement du rendu du contenu vidéo panoramique à l'angle de visionnement différent en réponse à la détermination que l'angle de visionnement est passé à l'angle de visionnement différent.

12. Procédé selon l'une quelconque des revendications 1 à 11, dans lequel le contenu vidéo comprend des informations audio, et comprenant en outre l'entraînement du rendu des informations audio sur la base, au moins en partie, de l'affichage de l'indicateur de région vidéo (502, 512, 522).

13. Appareil comprenant des moyens pour réaliser le procédé de l'une quelconque des revendications précédentes.

14. Appareil de la revendication 13, dans lequel les moyens pour réaliser le procédé comprennent au moins un processeur et au moins une mémoire, la mémoire comprenant des instructions lisibles par machine, qui, lorsqu'elles sont exécutées, font en sorte que l'appareil réalise le procédé selon l'une quelconque des revendications 1 à 12.

15. Support(s) lisible(s) par ordinateur comprenant des instructions qui, lorsqu'elles sont exécutées par un ordinateur, font en sorte que l'ordinateur réalise le procédé selon l'une quelconque des revendications 1 à 12.
